## Europäisches Patentamt

## European Patent Office

## Office européen des brevets

(11) Veröffentlichungsnummer: **0 207 047**
**B1**

(12) # EUROPÄISCHE PATENTSCHRIFT

(45) Veröffentlichungstag der Patentschrift:
**03.01.90**

(51) Int. Cl.⁴: **B32B 27/08,** B29C 43/20,
B29C 47/02

(21) Anmeldenummer: **86890011.9**

(22) Anmeldetag: **23.01.86**

(54) **Steifer Formkörper aus miteinander verpressten orientierten Kunststoffträgern sowie Verfahren zu seiner Herstellung.**

(30) Priorität: **25.01.85 AT 201/85**

(43) Veröffentlichungstag der Anmeldung:
**30.12.86 Patentblatt 86/52**

(45) Bekanntmachung des Hinweises auf die Patenterteilung:
**03.01.90 Patentblatt 90/1**

(84) Benannte Vertragsstaaten:
**BE CH DE FR GB IT LI LU NL SE**

(56) Entgegenhaltungen:
**EP-A- 0 031 157**
**CH-A- 563 236**
**DE-A- 2 729 908**

(73) Patentinhaber: **Schobermayr, Harald, Dipl.-Ing.,
Helpelweg 9/4, A-8706 Leoben(AT)**

(72) Erfinder: **Schobermayr, Harald, Dipl.-Ing.,
Helpelweg 9/4, A-8706 Leoben(AT)**

(74) Vertreter: **Wolfram, Gustav, Dipl.-Ing.,
Schwindgasse 7 P.O. Box 205, A-1041 Wien(AT)**

## Beschreibung

Die Erfindung betrifft einen steifen Formkörper, wie eine Platte oder ein Rohr, aus einer Vielzahl übereinander und/oder nebeneinander geschichteter und miteinander verpreßter, orientierter, d.h. verstreckter, thermoplastischer Kunststoffträger in Folien-, Bändchen-, Monofil- oder Faserform.

Durch Orientieren von thermoplastischen Kunststoffen ist es möglich, deren physikalische Eigenschaften zu verändern. Vor allem teilkristalline Werkstoffe zeigen dabei z.B. eine Steigerung der Streckspannung, Reißfestigkeit, Durchstoßfestigkeit, Tieftemperaturfestigkeit und Transparenz und eine Verringerung der Bruchdehnung. Großtechnische Verstreckungsprozesse werden hauptsächlich für die Herstellung von Produkten mit kleinen Geometrieabmessungen normal zur Orientierungsrichtung eingesetzt, wie z.B. für Folien, Folienbändchen, Monofilen und Fasern.

Zur Herstellung von Formkörpern mit größeren Geometrieabmessungen ist es bekannt (EP-A - 0 031 157), verstreckte teilkristalline thermoplastische Folien aus demselben Kunststoff miteinander unter Druck- und Temperatureinwirkung zu verpressen. Dabei muß die Preßtemperatur bis knapp an die Temperatur des Kristallitschmelzendes der Folie gesteigert werden, um eine ausreichende Beweglichkeit der Molekülketten der Kunststoffolien zu erreichen, da erst dann eine genügende Verbundhaftung zustandekommt. Diese hohe Preßtemperatur bedingt eine Relaxation der Orientierung der Folie, wodurch es zu einem Abfall der durch die Verstreckung erreichten günstigen Eigenschaften kommt. Mit dem bekannten Verfahren ist es daher nicht möglich, Formkörper größerer Geometrieabmessungen herzustellen, die ähnlich gute Eigenschaften aufweisen wie die verstreckten Trägerfolien.

Aus der DE-A 2 729 908 ist es bekannt, ein Material zur Bildung eines Faltbehälters herzustellen, welches eine Kernschicht aus Kunststoff und an mindestens einer Seite dieser Kernschicht eine Schicht aus einem thermoplastischen Material aufweist, wobei die Kernschicht aus einem Material mit einem höheren Erweichungspunkt als das Material der äußeren Schichten besteht. Die Bildung des Faltebehälters erfolgt durch Verschweißen des Grundmaterials entlang von Linien, wobei die äußeren Schichten einander berühren und während des Verschweißens eine Erhitzung auf eine Temperatur erfolgt, bei der nur die äußere Schicht für eine Verschweißung genügend geschmolzen wird, wogegen die Kernschicht einen unverzerrten Strukturträger für die äußere Schicht während und nach dem Schweißen bildet, so daß ein Verwerfen oder Schrumpfen des Behälterrohlings beim Schweißvorgang vermieden wird.

Die Erfindung bezweckt die Vermeidung dieser Nachteile und Schwierigkeiten und stellt sich die Aufgabe, einen Formkörper der eingangs beschriebenen Art zu schaffen, bei dem es durch das Verpressen bei erhöhter Temperatur zu keinem nennenswerten Abfall der durch das Verstrecken eines einzelnen Kunststoffträgers erzielten günstigen Eigenschaften kommt, so daß der Formkörper trotz seiner größeren, die Abmessungen des einzelnen Kunststoffträgers wesentlich überschreitenden Geometrieabmessungen näherungsweise die mechanischen und technologischen Eigenschaften eines einzelnen verstreckten Kunststoffträgers aufweist.

Diese Aufgabe wird erfindungsgemäß dadurch gelöst, daß die verstreckten Kunststoffträger an den beim Über- und/oder Nebeneinanderschichten zur Anlage gelangenden Seiten mit thermoplastischem Kunststoff beschichtet sind, wobei das Beschichtungsmaterial eine niedrigere Kristallitschmelztemperatur bzw. Glasumwandlungstemperatur aufweist als die Kunststoffträger und die Dicke von je zwei aneinanderliegenden Beschichtungsmaterialien geringer ist als die Dicke eines Kunststoffträgers.

Für die Haftung der miteinander verpreßten Kunststoffträger sorgt erfindungsgemäß das Beschichtungsmaterial derselben: Beim Über- und/oder Nebeneinanderschichten der beschichteten Kunststoffträger kommen die Beschichtungsmaterialien benachbarter Kunststoffträger aneinander zu liegen. Da die Kristallitschmelztemperatur im Falle teilkristallinen Beschichtungsmaterials bzw. die Glasumwandlungstemperatur amorphen Beschichtungsmaterials unter der Kristallitschmelztemperatur der zu verbindenden verstreckten teilkristallinen Kunststoffträger bzw. unter der Glasumwandlungstemperatur im Falle amorpher Kunststoffträger liegt, genügt es, als Preßtemperatur eine Temperatur zu wählen, bei der das Beschichtungsmaterial so weit schmilzt, daß eine ausreichende Verbundhaftung zwischen den Beschichtungsmaterialien benachbarter Kunststoffträger erfolgt.

Da somit die Preßtemperatur unterhalb der Kristallitschmelztemperatur bzw. Glasumwandlungstemperatur der Kunststoffträger gehalten werden kann, werden die vorteilhaften Eigenschaften der verstreckten Kunststoffträger durch die Preßtemperatur, wenn überhaupt, nur sehr geringfügig verändert.

Da das Beschichtungsmaterial infolge des Erhitzens auf Kristallitschmelztemperatur bzw. Glasumwandlungstemperatur oder darüber die günstigen Eigenschaften des Formkörpers im Verhältnis zu den günstigen Eigenschaften eines einzelnen verstreckten Kunststoffträgers herabsetzt, soll der Volumsanteil des Beschichtungsmaterials am Formkörper möglichst gering sein, vorzugsweise beträgt das Volumen des Beschichtungsmaterials höchstens 20 % des Volumens des Formkörpers.

Eine bevorzugte Ausführungsform ist dadurch gekennzeichnet, daß die Kunststoffträger aus Polypropylen und das Beschichtungsmaterial aus Polyäthylen, Polypropylen oder einem Copolymeren dieser bestehen.

Gemäß einer weiteren bevorzugten Ausführungsform betragen die Reißfestigkeit und der Elastizitätsmodul des aus gleichgerichtet geschichteten Kunststoffträgern gebildeten und verpreßten Formkörpers mindestens 80 % der Reißfestigkeit bzw. des Elastizitätsmoduls eines verstreckten Kunststoffträgers, wobei zweckmäßig für einen Formkörper aus biaxial verstreckten Kunststoffträgern die Reißfestigkeit nach DIN 53455 normal zur Laufrichtung mindestens 170 N/mm² und der Elastizitätsmodul normal zur Laufrichtung nach DIN 53457 mindestens 3800 N/mm² und die Schlagenergie, gemessen an einer 1,5 mm dicken Platte nach DIN 53453 mindestens 60 J betragen.

Eine andere bevorzugte Ausführungsform ist dadurch gekennzeichnet, daß die Reißfestigkeit und der Elastizitätsmodul des aus im Winkelverbund geschichteten Kunststoffträgern gebildeten und verpreßten Formkörpers mindestens 40 % der maximalen Reißfestigkeit bzw. des maximalen Elastizitätsmoduls eines verstreckten Kunststoffträgers betragen, wobei zweckmäßig für einen Formkörper aus biaxial verstreckten Kunststoffträgern die Reißfestigkeit nach DIN 53455 mindestens 100 N/mm² und der Elastizitätsmodul nach DIN 53457 mindestens 2200 N/mm² und die Schlagenergie gemessen an einer 1,5 mm dicken Platte nach DIN 53453 mindestens 60 J betragen.

Vorzugsweise weist der Formkörper eine Mindestdicke von 3/10 mm auf, da ab dieser Dicke die guten technologischen Eigenschaften des Formkörpers im besonderen zum Tragen kommen. Diese Dicke ergibt sich bei Verwendung von etwa mindestens zehn Kunststoffträgern in üblicher Stärke.

Gemäß einer bevorzugten Ausführungsform ist mindestens ein zwischen dem untersten und obersten folienförmigen Kunststoffträger liegender Kunststoffträger von einem bedruckten folienförmigen Kunststoffträger gebildet oder ist vorzugsweise ein zwischen dem untersten und obersten folienförmigen Kunststoffträger liegender Kunststoffträger ersetzt durch eine Metallfolie, die gegebenenfalls mit einem Aufdruck versehen ist. Hierdurch lassen sich in einfacher Weise z.B. Schilder bzw. undurchsichtige Formkörper herstellen, wobei die undurchsichtige bzw. mit einem Aufdruck versehene Schicht gut geschützt im Inneren des Formkörpers liegt.

Gemäß einer weiteren bevorzugten Ausführungsform ist der unterste und/oder der oberste Kunststoffträger von einer Folie mit erhöhtem Widerstand gegen mechanischen Abrieb und/oder gegen chemische Angriffe gebildet, wodurch der Formkörper beispielsweise für Scheiben von Fahrzeugen verwendet werden kann.

Ein Verfahren zur Herstellung eines Formkörpers durch Verbinden übereinander und/oder nebeneinander geschichteter verstreckter Kunststoffträger aus thermoplastischen Kunststoffen unter Einwirkung von Wärme und Druck ist dadurch gekennzeichnet, daß eine Vielzahl von an den gegenseitigen Berührungsflächen mit thermoplastischem Kunststoff beschichteten Kunststoffträgern bei einer Temperatur verpreßt werden, die im Bereich bzw. oberhalb der Kristallitschmelztemperatur bzw. der Glasumwandlungstemperatur des Beschichtungsmaterials und unterhalb der Kristallitschmelztemperatur bzw. Glasumwandlungstemperatur der verstreckten Kunststoffträger liegt.

Eine ausreichende Haftung zwischen den verpreßten Kunststoffträgern und dem Beschichtungsmaterial wird zweckmäßig dadurch erzielt, daß verstreckte Kunststoffträger verwendet werden, bei denen das Beschichtungsmaterial durch Coextrusion aufgebracht worden ist.

Gemäß einer anderen bevorzugten Ausführungsform werden zur Erzielung einer ausreichenden Haftung zwischen Kunststoffträgern und Beschichtungsmaterial verstreckte Kunststoffträger verwendet, bei denen das Beschichtungsmaterial mit Hilfe eines Haftvermittlers aufgebracht worden ist.

Eine vorteilhafte Ausführungsform des Verfahrens ist dadurch gekennzeichnet, daß biaxial verstreckte Kunststoffträger, die in Laufrichtung 1 : 3 bis 1 : 6 und normal dazu 1 : 8 bis 1 : 12 verstreckt sind, aus isotaktischem Polypropylen mit einer Reißfestigkeit normal zur Laufrichtung von etwa 200 N/mm² und einem Elastizitätsmodul normal zur Laufrichtung von etwa 4200 N/mm² verwendet werden, welche im Extrusionsverfahren mit einer Schicht aus copolymerem Polypropylen/ Polyäthylen mit einer Dicke von etwa 6 % der Dicke des Kunststoffträgers beschichtet worden sind, wobei zweckmäßig das Verpressen bei einem Druck von mindestens 10 bar (1 MPa) und einer Temperatur im Bereich von 130°C bis 150°C, vorzugsweise bei etwa 140°C, während einer Zeitdauer von mindestens 5 sec durchgeführt wird, worauf eine Abkühlung unter Druckeinwirkung auf eine Temperatur, bei der das Beschichtungsmaterial im wesentlichen erstarrt ist oder darunter, erfolgt.

Vorzugsweise wird der Formkörper durch Wickeln eines beschichteten Kunststoffträgers um einen Formkern geformt und erfolgt das Verpressen allein durch Erwärmen des Formkörpers auf eine Temperatur oberhalb der Kristallitschmelztemperatur bzw. Glasumwandlungstemperatur des Beschichtungsmaterials und unterhalb der Kristallitschmelztemperatur bzw. Glasumwandlungstemperatur des verstreckten Kunststoffträgers.

Bei einem Verfahren dieser Art wird der Wickelkörper aus biaxial verstreckten Kunststoffträgern, die in Laufrichtung 1 : 3 bis 1 : 6 und normal dazu 1 : 8 bis 1 : 12 verstreckt sind, aus isotaktischem Polypropylen gebildet und auf eine Temperatur im Bereich von 130 bis 150°C, vorzugsweise auf eine Temperatur von etwa 140°C, erwärmt und anschließend auf Raumtemperatur abgekühlt.

Die Erfindung ist nachstehend anhand von Ausführungsbeispielen näher erläutert.

Als Ausgangsmaterial zur Herstellung eines plattenförmigen Formkörpers mit 1,5 mm Plattendicke wurde eine biaxial verstreckte Polypropylenfolie, die beidseitig mit einem Äthylen/Propylen-Copolymeren im Coextrusionsverfahren beschichtet wurde, gewählt. Das Verstreckungsverhältnis der Polypropylenfolie betrug in Maschinenrichtung 4 bis 5 und senkrecht zur Maschinenrichtung 8 bis 12. Die Dicke der Polypropylenfolie samt beidseitiger Beschichtung betrug 0,03 mm, die Dicke der Beschichtung je Seite 0,0015 mm.

Tabelle 1

| Kenndaten der verstreckten Polypropylenfolie | | |
|---|---|---|
| Dicke (mm) 0,03 | | |
| E-Modul (Tangentenmodul 0,1) | DIN 53457 | |
| | Laufrichtung | 2300 (N/mm$^2$) |
| | Normalrichtung | 4700 (N/mm$^2$) |
| Reißfestigkeit | DIN 53455 | |
| | Laufrichtung | 80 (N/mm$^2$) |
| | Normalrichtung | 210 (N/mm$^2$) |
| Reißdehnung | DIN 53455 | |
| | Laufrichtung | ~ 150 (%) |
| | Normalrichtung | ~ 20 (%) |

Es wurden 50 dieser Polypropylenfolien zu einem Stapel übereinander geschichtet, u.zw. in gleicher Orientierung übereinander gestapelt. Dieser Stapel wurde bei einem spezifischen Preßdruck von 25 bar (2,5 MPa) und bei einer Preßtemperatur von 140°C über einen Zeitraum von 10 sec verpreßt. Anschließend erfolgte eine Abkühlung unter Druck auf etwa 60°C. Der auf diese Weise gepreßte Formkörper wies eine Dicke von 1,5 mm auf.

Tabelle 2

| Kenndaten des verpreßten Formkörpers | | |
|---|---|---|
| Dicke (mm) 1,5 (50 Lagen à 0,03) | | |
| E-Modul (Tangentenmodul 0,1) | DIN 53457 | |
| | Laufrichtung | mind. 2100 (N/mm$^2$) |
| | Normalrichtung | mind. 4650 (N/mm$^2$) |
| Reißfestigkeit | DIN 53455 | |
| | Laufrichtung | 75 (N/mm$^2$) |
| | Normalrichtung | 200 (N/mm$^2$) |
| Reißdehnung | DIN 53455 | |
| | Laufrichtung | ~ 175 (%) |
| | Normalrichtung | ~ 25 (%) |
| Schlagenergie im Fallbolzentest | DIN 53453 | 80 (J) |
| [Plattendicke (mm) 1,5, Plattendurchmesser (mm) 84, Fallhöhe (cm) 100, Masse (kg) 24,5, Prüftemperatur (°C) 23] | | |
| Lichttechnische Werte | DIN 5036, Methode Schuch, BASF | |
| Gesamtdurchlässigkeit T | 90 (%) | |
| Gesamtstreuanteil SI | 7 (%) | |
| Weitwinkelstreuanteil SII | 3 (%) | |

In nachstehender Tabelle 3 sind Kenndaten eines in herkömmlicher Weise durch Pressen gefertigten isotropen Formkörpers von 1,5 mm Dicke, der ebenfalls aus Polypropylen hergestellt ist, wiedergegeben.

Tabelle 3

| Kenndaten des isotropen Formkörpers | | |
|---|---|---|
| Reißfestigkeit | DIN 53455 | 35 (N/mm$^2$) |
| Reißdehnung | DIN 53455 | ca. 700 (%) |
| Biegekriechmodul | | 1300 (N/mm$^2$) |
| Schlagenergie im Fallbolzentest | DIN 53443 | 2 (J) |
| [Plattendicke (mm) 1,5, Plattendurchmesser (mm) 84, Fallhöhe (cm) 100, Masse (kg) 24,5, Prüftemperatur (°C) 23] | | |
| Lichttechnische Werte | DIN 5036, Methode Schuch, BASF | |
| Gesamtdurchlässigkeit T | 81 (%) | |
| Gesamtstreuanteil SI | 81 (%) | |
| Weitwinkelstreuanteil SII | 64 (%) | |

Ein Vergleich der Tabellen zeigt, daß der E-Modul, die Reißfestigkeit und die Reißdehnung des verpreßten Formkörpers nur geringfügig geringer sind als die entsprechenden Werte der verstreckten Polypropylenfolie. Bedeutende Unterschiede bezüglich der Reißfestigkeit, der Reißdehnung und der Schlagenergie bestehen zwischen dem verpreßten Formkörper und dem isotropen Formkörper. Beispielsweise ist die Schlagenergie des verpreßten Formkörpers um den Faktor 40 höher als die Schlagenergie des isotropen Formkörpers. Auch liegen die lichttechnischen Werte des verpreßten Formkörpers hinsichtlich Transparenz erheblich besser als die lichttechnischen Werte des isotropen Formkörpers.

In nachstehender Tabelle 4 sind mechanisch-technologische Werte für einen Formkörper enthalten, der aus dem gleichen Ausgangsmaterial und im wesentlichen gleich hergestellt wurde, wie der zuvor beschriebene Formkörper, der jedoch aus im Kreuzverbund geschichteten Folien zusammengesetzt ist. Unter Kreuzverbund wird ein Winkelverbund verstanden, bei dem die einzelnen Schichten der Kunststoffträger hinsichtlich ihrer durch Verstreckung erzielten Orientierung jeweils um 90° zur darunter liegenden Schicht verdreht übereinander geschichtet sind.

Tabelle 4

| Kenndaten des verpreßten Formkörpers | | |
|---|---|---|
| Dicke (mm) 1,5 (50 Lagen à 0,03) | | |
| E-Modul (Tangentenmodul 0,1) | DIN 53457 Laufrichtung oder Normalrichtung | mind. 3400 (N/mm$^2$) |
| Reißfestigkeit | DIN 53455 Laufrichtung oder Normalrichtung | 75 (N/mm$^2$) |
| Schlagenergie im Fallbolzentest | DIN 53453 | 80 (J) |
| [Plattendicke (mm) 1,5, Plattendurchmesser (mm) 84, Fallhöhe (cm) 100, Masse (kg) 24,5, Prüftemperatur (°C) 23] | | |
| Lichttechnische Werte | DIN 5036, Methode Schuch, BASF | |
| Gesamtdurchlässigkeit T | 90 (%) | |
| Gesamtstreuanteil SI | 7 (%) | |
| Weitwinkelstreuanteil SII | 3 (%) | |

Es ist möglich, Formkörper nicht nur durch Verpressen von großflächigen Folien herzustellen, sondern es können Formkörper auch durch Wickeln von Folienbändchen, Fasern oder Monofilen über einen Formkern hergestellt werden. Der Thermoschrumpf der verstreckten Kunststoffträger, der von deren Verstreckungsgrad abhängig ist, reicht unter bestimmten Umständen aus, um den zum Herstellen der Verbundhaftung zwischen den Kunststoffträgern notwendigen Preßdruck zu erzeugen, so daß eine eigene Druckeinwirkung von außen nicht erforderlich ist. Ein Beispiel dafür ist nachfolgend angegeben:

Es wurde eine Folie gemäß Tabelle 1 in Laufrichtung zu Bändchen von 10 mm Breite geschnitten und die Bändchen um einen Formkern mit 30 mm Durchmesser gewickelt. Anschließend erfolgte ein Tempern bei 140°C mit anschließendem Abkühlen auf Entformungstemperatur (Raumtemperatur). Zum Erzielen eines Verbundes der Bändchen war kein zusätzlicher Druck von außen erforderlich; der beim Tempern auftretende Thermoschrumpf hat im gegebenen Fall ausgereicht, die einzelnen Lagen der Bändchen genügend fest aneinanderzupressen.

Weiters ist es möglich, durch eine spezielle Anordnung der einzelnen Schichten der Kunststoffträger eine gezielte Anisotropie im Formkörper zu erreichen, wodurch eine beanspruchungsgerechte Dimensionierung von Formteilen erzielt wird.

Ein Formkörper muß nicht aus untereinander gleichen Kunststoffträgern aufgebaut sein, sondern es können Kunststoffträger unterschiedlicher Kunststoffe und unterschiedlicher Dimensionen (wie z.B. der Dicke) zum Einsatz gelangen, wodurch die Möglichkeit besteht, einen Formkörper entsprechend den an ihn gestellten Anforderungen herzustellen.

Weiters ist es möglich, einen Kunststoffträger durch eine Metallfolie oder einen mit einem Aufdruck versehenen Kunststoffträger zu ersetzen, wodurch eine graphische Gestaltung des Formkörpers in einfacher Weise erzielt werden kann und eine Beschädigung der Metallfolie bzw. des bedruckten Kunststoffträgers vermieden wird, da diese im Inneren des Formkörpers liegen. Zur Herstellung von Formkörpern, die als Scheiben, beispielsweise für Fahrzeuge, in Betracht kommen, werden der unterste und/oder der oberste Kunststoffträger von einer Folie, die eine erhöhte Kratzfestigkeit aufweist, wie einer Polyesterfolie, gebildet. Auch ist es möglich, hier Folien mit erhöhtem Widerstand gegen chemische Angriffe vorzusehen, wodurch sich für den erfindungsgemäßen Formkörper eine Vielzahl von weiteren Verwendungsmöglichkeiten ergibt.

**Patentansprüche**

1. Steifer Formkörper, wie eine Platte oder ein Rohr, aus einer Vielzahl übereinander und/oder nebeneinander geschichteter und miteinander verpreßter, orientierter, d.h. verstreckter, thermoplastischer Kunststoffträger in Folien-, Bändchen-, Monofil- oder Faserform, dadurch gekennzeichnet, daß die verstreckten Kunststoffträger an den beim Über- und/oder Nebeneinanderschichten zur Anlage gelangenden Seiten mit thermoplastischem Kunststoff beschichtet sind, wobei das Beschichtungsmaterial eine niedrigere Kristallitschmelztemperatur bzw. Glasumwandlungstemperatur aufweist als die Kunststoffträger und die Dicke von je zwei aneinanderliegenden Beschichtungsmaterialien geringer ist als die Dicke eines Kunststoffträgers.

2. Formkörper nach Anspruch 1, dadurch gekennzeichnet, daß das Volumen des Beschichtungsmaterials höchstens 20 % des Volumens des Formkörpers beträgt.

3. Formkörper nach Anspruch 1 oder 2, dadurch gekennzeichnet, daß die Kunststoffträger aus Polypropylen und das Beschichtungsmaterial aus Polyäthylen, Polypropylen oder einem Copolymeren dieser bestehen.

4. Formkörper nach einem oder mehreren der Ansprüche 1 bis 3, dadurch gekennzeichnet, daß die Reißfestigkeit und der Elastizitätsmodul des aus gleichgerichtet geschichteten Kunststoffträgern gebildeten und verpreßten Formkörpers mindestens 80 % der Reißfestigkeit bzw. des Elastizitätsmoduls eines verstreckten Kunststoffträgers betragen.

5. Formkörper nach den Ansprüchen 3 und 4, dadurch gekennzeichnet, daß für einen Formkörper aus biaxial verstreckten Kunststoffträgern die Reißfestigkeit nach DIN 53455 normal zur Laufrichtung mindestens 170 $N/mm^2$ und der Elastizitätsmodul normal zur Laufrichtung nach DIN 53457 mindestens 3800 $N/mm^2$ und die Schlagenergie, gemessen an einer 1,5 mm dicken Platte nach DIN 53453 mindestens 60 J betragen.

6. Formkörper nach einem oder mehreren der Ansprüche 1 bis 3, dadurch gekennzeichnet, daß die Reißfestigkeit und der Elastizitätsmodul des aus im Winkelverbund geschichteten Kunststoffträgern gebildeten und verpreßten Formkörpers mindestens 40 % der maximalen Reißfestigkeit bzw. des maximalen Elastizitätsmoduls eines verstreckten Kunststoffträgers betragen.

7. Formkörper nach den Ansprüchen 3 und 6, dadurch gekennzeichnet, daß für einen Formkörper aus biaxial verstreckten Kunststoffträgern die Reißfestigkeit nach DIN 53455 mindestens 100 $N/mm^2$ und der Elastizitätsmodul nach DIN 53457 mindestens 2200 $N/mm^2$ und die Schlagenergie gemessen an einer 1,5 mm dicken Platte nach DIN 53453 mindestens 60 J betragen.

8. Formkörper nach den Ansprüchen 1 bis 7, dadurch gekennzeichnet, daß er eine Mindestdicke von 3/10 mm aufweist.

9. Formkörper nach den Ansprüchen 1 bis 8, dadurch gekennzeichnet, daß mindestens ein zwischen dem untersten und obersten folienförmigen Kunststoffträger liegender Kunststoffträger von einem bedruckten folienförmigen Kunststoffträger gebildet ist.

10. Formkörper nach den Ansprüchen 1 bis 8, dadurch gekennzeichnet, daß ein zwischen dem untersten und obersten folienförmigen Kunststoffträger liegender Kunststoffträger ersetzt ist durch eine Metallfolie, die gegebenenfalls mit einem Aufdruck versehen ist.

11. Formkörper nach den Ansprüchen 1 bis 10, dadurch gekennzeichnet, daß der unterste und/oder der oberste Kunststoffträger von einer Folie mit erhöhtem Widerstand gegen mechanischen Abrieb und/oder gegen chemische Angriffe gebildet ist.

12. Verfahren zur Herstellung eines Formkörpers nach einem oder mehreren der Ansprüche 1 bis 11 durch Verbinden übereinander und/oder nebeneinander geschichteter verstreckter Kunststoffträger aus thermoplastischen Kunststoffen unter Einwirkung von Wärme und Druck, dadurch gekennzeichnet, daß eine Vielzahl von an den gegenseitigen Berührungsflächen mit thermoplastischem Kunststoff beschichteten Kunststoffträgern bei einer Temperatur verpreßt werden, die im Bereich bzw. oberhalb der Kristallitschmelztemperatur bzw. der Glasumwandlungstemperatur des Beschichtungsmaterials und unterhalb der Kristallitschmelztemperatur bzw. Glasumwandlungstemperatur der verstreckten Kunststoffträger liegt.

13. Verfahren nach Anspruch 12, dadurch gekennzeichnet, daß verstreckte Kunststoffträger verwendet werden, bei denen das Beschichtungsmaterial durch Coextrusion aufgebracht worden ist.

14. Verfahren nach Anspruch 12 oder 13, dadurch gekennzeichnet, daß verstreckte Kunststoffträger verwendet werden, bei denen das Beschichtungsmaterial mit Hilfe eines Haftvermittlers aufgebracht worden ist.

15. Verfahren nach einem oder mehreren der Ansprüche 12 bis 14, dadurch gekennzeichnet, daß biaxial verstreckte Kunststoffträger, die in Laufrichtung 1 : 3 bis 1 : 6 und normal dazu 1 : 8 bis 1 : 12 verstreckt sind, aus isotaktischem Polypropylen mit einer Reißfestigkeit normal zur Laufrichtung von etwa 200 N/mm² und einem Elastizitätsmodul normal zur Laufrichtung von etwa 4200 N/mm² verwendet werden, welche im Extrusionsverfahren mit einer Schicht aus copolymerem Polypropylen/Polyäthylen mit einer Dicke von etwa 6 % der Dicke des Kunststoffträgers beschichtet worden sind.

16. Verfahren nach Anspruch 15, dadurch gekennzeichnet, daß das Verpressen bei einem Druck von mindestens 10 bar (1 MPa) und einer Temperatur im Bereich von 130°C bis 150°C, vorzugsweise bei etwa 140°C, während einer Zeitdauer von mindestens 5 sec durchgeführt wird, worauf eine Abkühlung unter Druckeinwirkung auf eine Temperatur, bei der das Beschichtungsmaterial im wesentlichen erstarrt ist oder darunter, erfolgt.

17. Verfahren nach Anspruch 12, dadurch gekennzeichnet, daß der Formkörper durch Wickeln eines beschichteten Kunststoffträgers um einen Formkern geformt wird und das Verpressen allein durch Erwärmen des Formkörpers auf eine Temperatur oberhalb der Kristallitschmelztemperatur bzw. Glasumwandlungstemperatur des Beschichtungsmaterials und unterhalb der Kristallitschmelztemperatur bzw. Glasumwandlungstemperatur des verstreckten Kunststoffträgers erfolgt.

18. Verfahren nach Anspruch 17, dadurch gekennzeichnet, daß der Wickelkörper aus biaxial verstreckten Kunststoffträgern, die in Laufrichtung 1 : 3 bis 1 : 6 und normal dazu 1 : 8 bis 1 : 12 verstreckt sind, aus isotaktischem Polypropylen gebildet wird und auf eine Temperatur im Bereich von 130 bis 150°C, vorzugsweise auf eine Temperatur von etwa 140°C, erwärmt und anschließend auf Raumtemperatur abgekühlt wird.

## Claims

1. A rigid shaped body, such as a plate or a pipe, comprised of a plurality of superposed and/or adjacently laminated and commonly pressed, oriented, i.e., stretched, thermoplastic carriers in film, ribbon, monofil or fibre form, characterised in that the stretched plastic carriers, on the sides getting into contact when superposed and/or adjacently laminated, are coated with thermoplastic material, the coating material having a crystallite melting temperature or a glass transition temperature lower than that of the plastic carriers and the thickness of two adjacent coating materials each being smaller than the thickness of one plastic carrier.

2. A shaped body according to claim 1, characterised in that the volume of the coating material amounts to 20 percent at most of the volume of the shaped body.

3. A shaped body according to claim 1 or 2, characterised in that the plastic carriers consist of polypropylene and the coating material consists of polyethylene, polypropylene or of a copolymer thereof.

4. A shaped body according to one or several of claims 1 to 3, characterised in that the ultimate tensile strength and the modulus of elasticity of the pressed shaped body formed of equally oriented laminated plastic carriers amount to at least 80 percent of the ultimate tensile strength and of the modulus of elasticity of a stretched plastic carrier.

5. A shaped body according to claims 3 and 4, characterised in that, with a shaped body of biaxially stretched plastic carriers, the ultimate tensile strength perpendicular to the running direction amounts to at least 170 N/mm² according to DIN 53455, the modulus of elasticity perpendicular to the running direction is at least 3,800 N/mm² according to DIN 53457 and the impact energy, measured at a 1.5 mm thick plate, is at least 60 J according to DIN 53453.

6. A shaped body according to one or several of claims 1 to 3, characterised in that the ultimate tensile strength and the modulus of elasticity of the shaped body formed by angularly laminated plastic carriers and pressed, amount to at least 40 percent of the maximum ultimate tensile strength and of the maximum modulus of elasticity, respectively, of a stretched plastic carrier.

7. A shaped body according to claims 3 and 6, characterised in that, with a shaped body of biaxially stretched plastic carriers, the ultimate tensile strength is at least 100 N/mm² according to DIN 53455, the modulus of elasticity is at least 2,200 N/mm² according to DIN 53457 and the impact energy, measured at a 1.5 mm thick plate, is at least 60 J according to DIN 53453.

8. A shaped body according to claims 1 to 7, characterised in that it has a minimum thickness of 3/10 mm.

9. A shaped body according to claims 1 to 8, characterised in that at least one plastic carrier lying between the lowermost and the uppermost filmshaped plastic carriers is formed by a printed filmshaped plastic carrier.

10. A shaped body according to claims 1 to 8, characterised in that a plastic carrier disposed between the lowermost and the uppermost filmshaped plastic carriers is replaced by a metal foil, which optionally is provided with an imprint.

11. A shaped body according to claims 1 to 10, characterised in that the lowermost and/or uppermost plastic carrier is formed by a film of increased resistance to mechanical abrasion and/or to chemical attacks.

12. A method for producing a shaped body according to one or several of claims 1 to 11 by connecting superposed and/or adjacently laminated stretched carriers of thermoplastics under thermal and pressure influence, characterised in that a plurality of plastic carriers coated with thermoplastic material on their mutual contact surfaces are commonly pressed at a temperature in the range of, or above, the crystallite melting temperature or the glass transition temperature of the coating material and below the crystallite melting temperature or the glass transition temperature of the stretched plastic carriers.

13. A method according to claim 12, characterised in that stretched plastic carriers are used to which the coating material has been applied by coextrusion.

14. A method according to claim 12 or 13, characterised in that stretched plastic carriers are used to which the coating material has been applied with the help of an adhesion mediator.

15. A method according to one or several of claims 12 to 14, characterised in that biaxially stretched plastic carriers stretched by 1:3 to 1:6 in the running direction and by 1:8 to 1:12 perpendicular thereto and made of isotactic polypropylene, which have an ultimate tensile strength of about 200 N/mm$^2$ perpendicular to the running direction and a modulus of elasticity of about 4,200 N/mm$^2$ perpendicular to the running direction are used after having been coated with a layer of copolymer polypropylene/polyethylene with a thickness of about 6 percent of the thickness of the plastic carrier in the extrusion process.

16. A method according to claim 15, characterised in that pressing takes place at a pressure of at least 10 bar (1 WPa) and at a temperature in the range of from 130°C to 150°C, preferably at about 140°C, for a period of at least 5 s, whereupon cooling under pressure to a temperature at which the coating material is substantially solidified, or therebelow, is effected.

17. A method according to claim 12, characterised in that the shaped body is formed by winding a coated plastic carrier about a mandrel and that pressing takes place merely by heating the shaped body to a temperature above the crystallite melting temperature or the glass transition temperature of the coating material and to below the crystallite melting temperature or the glass transition temperature of the stretched plastic carrier.

18. A method according to claim 17, characterised in that the winding body is formed by biaxially stretched plastic carriers stretched by 1:3 to 1:6 in the running direction and by 1:8 to 1:12 perpendicular thereto and made of isotactic polypropylene, and is heated to a temperature in the range of from 130°C to 150°C, preferably to a temperature of about 140°C, and subsequently is cooled to room temperature.

## Revendications

1. Elément moulé rigide tel qu'une plaque ou un tube, constitué par une pluralité de couches de matière thermoplastique formant support sous forme de feuilles, de petites bandes, de monofils ou de fibres, qui sont orientées, c'est-à-dire étirées et disposées en couches superposées et/ou juxtaposées et qui sont comprimées ensemble, caractérisé en que les couches de matière plastique étirées formant support sont recouvertes au niveau des côtés venant en appui lors de la formation de couches superposées et/ou juxtaposées d'une matière thermoplastique, la matière. de recouvrement présentant une température de fusion des cristallites ou une température de transition vitreuse inférieure à celle des couches de matière plastique formant support, et l'épaisseur de deux matières de recouvrement disposées l'une contre l'autre étant inférieure à l'épaisseur d'une couche de matière plastique formant support.

2. Elément moulé selon la revendication 1, caractérisé en ce que le volume de la matière de recouvrement représente au plus 20% du volume de l'élément moulé.

3. Elément moulé selon la revendication 1 ou 2, caractérisé en ce que les couches de matière plastique formant support consistent en polypropylène et en ce que la matière de recouvrement consiste en polyéthyléne, en polypropylène ou en un copolymère de ceux-ci.

4. Elément moulé selon l'une ou plusieurs des revendications 1 à 3, caractérisé en ce que la résistance à la traction et le module d'élasticité de l'élément moulé constitué par des couches de matière plastique format support empilées dans la même direction et comprimé représentent au moins 80% de la résistance à la traction ou du module d'élasticité d'une couche de matière plastique formant support étirée.

5. Elément moulé selon les revendications 3 et 4, caractérisé en ce que, pour un élément moulé constitué par des couches de matière plastique formant support étirées de façon biaxiale, la résistance à la traction selon DIN 53 455 perpendiculairement à la direction de déplacement représente au moins 170 N/mm$^2$ et le module d'élasticité perpendiculairement à la direction de déplacement selon DIN 53 457 représente au moins 3 800 N/mm² et l'énergie d'impact, mesurée sur une plaque épaisse de 1,5 mm selon DIN 53 453 représente au moins 60 J.

6. Elément moulé selon une ou plusieurs des revendications 1 à 3, caractérisé en ce que la résistance à la traction et le module d'élasticité de l'élément moulé constitué par des couches de matière plastique formant support empilées selon une liaison à décalage angulaire et comprimé représentent au moins 40% de la résistance à la traction maximale ou du module d'élasticité maximal d'une couche de matière plastique formant support étirée.

7. Elément moulé selon les revendications 3 et 6, caractérisé en ce que, pour un élément moulé constitué par des couches de matière plastique formant support étirées de façon biaxiale, la résistance à la traction selon DIN 53 455 représente au moins 100 N/mm² et le module d'élasticité selon DIN 53 457 représente au moins 2 200 N/mm² et l'énergie d'impact mesurée sur une plaque épaisse de 1,5 mm selon DIN 53 453 représente au moins 60 J.

8. Elément moulé selon les revendications 1 à 7, caractérisé en ce qu'il présente une épaisseur minimale de 3/10 mm.

9. Elément moulé selon les revendications 1 à 8, caractérisé en ce qu'au moins une couche de matière plastique formant support située entre les couches de matière plastique formant support en forme de feuilles supérieure et inférieure est constituée par une couche de matière plastique formant support sous forme de feuille imprimée.

10. Elément moulé selon les revendications 1 à 8, caractérisé en ce qu'une couche de matière plastique formant support située entre les couches de matière plastique formant support sous forme de feuilles inférieure et supérieure est remplacée par une feuille métallique qui est munie éventuellement d'une impression.

11. Elément moulé selon les revendications 1 à 10, caractérisé en ce que la couche de matière plastique formant support inférieure et/ou supérieure est constituée par une feuille de résistance élévée contre l'érosion mécanique et/ou contre les attaques chimiques.

12. Procédé de fabrication d'un élément moulé selon une ou plusieurs des revendications 1 à 11 par liaison de couches de matière plastique formant support étirées disposées en couches superposées et/ou juxtaposées en matières thermoplastiques par action de la chaleur et de la pression, caractérisé en ce qu'une pluralité de couches de matière plastique formant support recouvertes de matière thermoplastique sur les surfaces de contact opposées sont comprimées à une température située dans le domaine ou au-dessus de la température de fusion des cristallites ou de la température de transition vitreuse de la matière de recouvrement et au-dessous de la température de fusion des cristallites ou de la température de transition vitreuse des couches de matière plastique formant support étirées.

13. Procédé selon la revendication 12, caractérisé en ce que l'on utilise des couches des matière plastique formant support étirées dans lesquelles la matière de recouvrement a été appliquée par co-extrusion.

14. Procédé selon la revendication 12 ou 13, caractérisé en ce que l'on utilise des couches de matière plastique formant support étirées dans lesquelles la matière de recouvrement a été appliquée à l'aide d'un agent adhésif.

15. Procédé selon une ou plusieurs des revendications 12 à 14, caractérisé en ce que l'on utilise des couches de matière plastique formant support étirées de façon biaxiale qui sont étirées dans la direction de déplacement dans le rapport de 1: 3 à 1: 6 et dans la direction perpendiculaire dans le rapport de 1: 8 à 1:12, en polypropylène isotactique ayant une résistance à la traction perpendiculairement à la direction de déplacement d'environ 200 N/mm² et un module d'élasticité perpendiculairement à la direction de déplacement d'environ 4 200 N/mm², lesquelles ont été recouvertes au cours du processus d'extrusion d'une couche d'un copolymère de polypropylène/polyéthylène d'une épaisseur d'environ 6% par rapport à l'épaisseur de la couche matière plastique formant support.

16. Procédé selon la revendication 15, caractérisé en ce que la compression est réalisée sous une pression d'au moins 10 bar (1 MPa) et à une température située dans la gamme de 130°C à 150°C, de préférence d'environ 140°C, pendant une durée d'au moins 5 s, après quoi a lieu un refroidissement avec application de pression à une température à laquelle la matière de recouvrement se solidifie sensiblement, ou au-dessous.

17. Procédé selon la revendication 12, caractérisé en ce que l'élément moulé est obtenu par enroulement autour d'un noyau d'une couche de matière plastique formant support empilée, et en ce que la compression a lieu seulement par chauffage de l'élément moulé à une température supérieure à la température de fusion des cristallites ou à la température de transition vitreuse de la matière de recouvrement et inférieure à la température de fusion des cristallites ou à la température de transition vitreuse de la couche de matière plastique formant support étirée.

18. Procédé selon la revendication 17, caractérisé en ce que l'élément enroulé est constitué par des couches de matière plastique formant support en polypropylène isotactique, étirées de façon biaxiale, qui sont étirées dans la direction de déplacement dans le rapport de 1: 3 à 1: 6 et dans la direction perpendiculaire dans le rapport de 1: 8 à 1:12, et est chauffé à une température dans la gamme de 130 à 150°C, de préférence à une température d'environ 140°C, puis refroidi à la température ambiante.